# FASCICULE DE BREVET EUROPEEN

(11) **EP 1 907 314 B1**
(45) Date de publication et mention de la délivrance du brevet: **06.03.2013**
(21) Numéro de dépôt: 06778896.8
(22) Date de dépôt: 20.07.2006
(51) Int. Cl.: B68F 1/00, B60R 13/02

(54) **PROCEDE DE MISE EN FORME D UNE PEAU DE CUIR**
VERFAHREN ZUR ANORDNUNG EINER LEDERHAUT
METHOD FOR SETTING A LEATHER SKIN

(30) Priorité: 22.07.2005 FR 0507835
(43) Date de publication de la demande: 09.04.2008
(73) Titulaire: Faurecia Intérieur Industrie, 92000 Nanterre (FR)
(72) Inventeur: CASSARO, Jonathan, F-95590 Presles (FR); BOVYN, Claire, c/o Faurecia Intérieur Industrie, F-60114 Méru (FR)
(74) Mandataire: Domenego, Bertrand
(86) Numéro de dépôt international: PCT/FR2006/001779
(87) Numéro de publication internationale: WO 2007/010142

(56) Documents cités:
- DE-A1- 19 926 470
- US-A- 5 922 431

## Description

L'invention concerne la mise en forme d'une peau de cuir destinée à être incorporée à une pièce de garniture, notamment du type qui comprend un support rigide qui délimite une cavité, une peau de cuir dont un bord est appliqué contre support rigide dans la cavité, et une mousse disposée entre le support rigide et la peau de cuir.

On utilise couramment des pièces du type précité ayant des peaux de matière plastique, pour diverses garnitures d'automobile, notamment pour les planches de bord et les garnitures de porte. Pour des raisons d'esthétique essentiellement, on cherche à utiliser le cuir comme peau. Cependant, celui-ci pose un certain nombre de problèmes, car il est constitué d'un matériau naturel qui présente des variations de propriétés, et il nécessite donc des traitements particuliers.

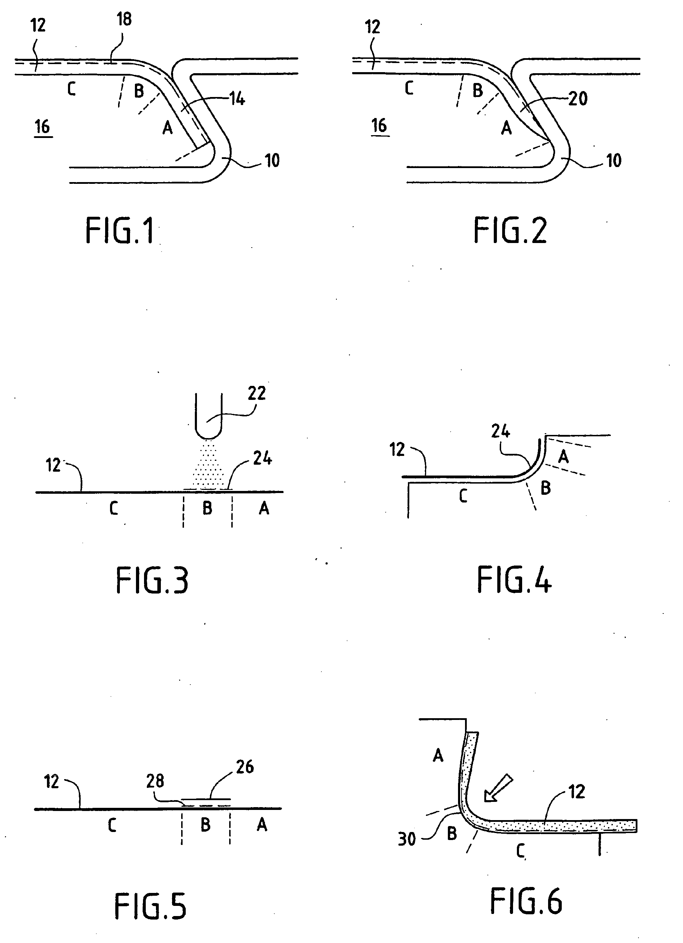

Dans le cas des pièces précitées, dont des exemples sont représentés sur les schémas des figures 1 et 2, un support rigide 10, formé en général d'une matière thermoplastique, maintient une peau 12 à son bord 14, et une mousse 16 est disposée entre le support 10 et la peau de cuir 12. Dans un procédé perfectionné, c'est la pression de la mousse 16 injectée entre le support rigide et la peau qui vient plaquer le bord 14 du cuir contre le support 10 et assure l'étanchéité.

Dans le cas de peaux de matière plastique, on sait déterminer des conditions telles que la mousse n'a pas tendance à s'infiltrer entre la peau et le support. Cependant, dans le cas du cuir dont les propriétés peuvent varier d'une pièce à l'autre, il est nécessaire de disposer d'opérations assurant toujours une bonne étanchéité entre le bord de la peau, plus précisément sa surface extérieure 18 qui est en général la fleur, et le support rigide.

On a suggéré, pour améliorer la souplesse du bord de la peau et donc pour obtenir une meilleure étanchéité, d'appliquer au bord de la peau de cuir une opération de parage, c'est-à-dire une coupe en biais du bord dont l'épaisseur diminue ainsi progressivement vers le bord, comme indiqué par la référence 20 sur la figure 2. Cette solution n'est cependant pas toujours suffisante, surtout lorsque le cuir est peu déformable.

Lorsqu'on observe une telle pièce de garniture, on peut distinguer trois régions dans la peau de cuir, une région A d'étanchéité dans laquelle la face extérieure de la peau doit être plaquée contre le support rigide en assurant l'étanchéité à la mousse injectée tout en permettant l'évacuation de l'air de la cavité, une région B dans laquelle la peau présente un changement de direction, et une région C dans laquelle la peau se trouve pratiquement dans le prolongement d'une surface extérieure de la pièce rigide qui l'entoure.

Du fait des variations de propriétés de cuir d'une pièce à une autre, la région B peut avoir des propriétés variables, si bien qu'une bonne étanchéité n'existe pas toujours et la mousse peut apparaître entre la peau et le support rigide.

Le document EP-145 560 décrit un procédé de façonnage de cuir à proximité d'une semelle de chaussure. Le document WO 2004/097053 concerne un procédé de finition d'objets de cuir par traitement localisé des bords uniquement. Le document G8-1 027 801 décrit un traitement du cuir par de l'eau ou de la vapeur d'eau appliquée à des régions seulement de pièces de cuir. Le document DE-19 926 470 décrit l'application de couches protectrice à la face intérieure d'un revêtement décoratif dans lequel les parties qui ne doivent pas être déformées sont rigidifiées.

Il est connu du document US-A-5 922 431 un produit de moulage en matière plastique comprenant une mousse avec une peau externe.

Aucun de ces documents ne permet la solution du problème posé par la maîtrise de la forme d'une peau de cuir à proximité d'une régions de coopération étanche d'une peau de cuir avec un support rigide par simple pression, et plus précisément la maîtrise de la partie de peau comprise dans la région B afin que les conditions de coopération étanche dans la région A soient optimales.

L'invention concerne une solution à ce problème posé par la variation d'étanchéité entre une peau de cuir et la support rigide.

A cet effet, l'invention met en oeuvre une étape de mise en forme de la peau dans la région B, et une étape d'application d'un traitement d'augmentation de rigidité dans cette région B, afin que le maintien en forme de la partie marginale ou région A soit facilité.

Dans des modes d'exécution, l'étape d'augmentation de rigidité est préalable à l'étape de mise en forme, et dans d'autres modes d'exécution, elle lui est postérieure.

Plus précisément, l'invention concerne un procédé de mise en forme d'une peau de cuir selon la revendication 1.

Dans un mode d'exécution, l'étape d'application d'un traitement d'augmentation de rigidité est exécutée avant l'étape de mise en forme et comprend une application locale d'un matériau de maintien en forme à la face intérieure de la peau.

Dans une variante, le matériau de maintien en forme est une résine thermoplastique, dont l'épaisseur est avantageusement de l'ordre de 1 mm.

Dans une autre variante, le matériau de maintien en forme est constitué d'une colle et d'un renfort thermoplastique. De préférence, le renfort thermoplastique est une bande thermodéformable, par exemple formée de textile imprégné d'une matière thermoplastique, telle qu'une polyoléfine.

Dans ce mode d'exécution, l'étape destinée à faciliter le maintien en forme comprend avantageusement un refroidissement, postérieur à une étape de chauffage et à l'étape de mise en forme sur un moule. Par exemple, l'étape de chauffage est exécutée à une température comprise entre 60 et 100 °C. Cette étape de chauffage peut être exécutée globalement dans une étuve, ou localement par une source de chaleur dirigée.

Dans un autre mode d'exécution, le matériau de maintien en forme est une bande d'aluminium collée localement à la face intérieure de la peau de cuir.

Dans un autre mode d'exécution, l'étape d'application d'un traitement d'augmentation de rigidité est effectuée après l'étape de mise en forme de la peau, et elle comprend un écrasement local de la peau de cuir audit emplacement allongé distant d'un bord de la peau. Cet écrasement local peut être effectué par application d'une pression, ou par martelage.

Dans un autre mode d'exécution, l'étape d'application d'un traitement d'augmentation de rigidité est effectuée après l'étape de mise en forme de la peau, le procédé comprend une application locale d'un matériau de maintien en forme à la face intérieure de la peau, et le procédé comprend le séchage du matériau de maintien en forme, par exemple de la colle, lorsque la peau de cuir est à la forme voulue.

Dans un autre mode d'exécution, l'étape d'application d'un traitement d'augmentation de rigidité est exécutée après l'étape de mise en forme de la peau et comprend l'application locale, à la face intérieure de la peau de cuir, d'un matériau d'imprégnation, puis le séchage du matériau d'imprégnation. De préférence, le matériau d'imprégnation est un fluide contenant une protéine, par exemple de la caséine.

Dans tous les modes d'exécution, il est avantageux que le procédé comprenne aussi une étape de découpe du bord en direction inclinée, dans une partie au moins de la peau de cuir comprise entre l'emplacement allongé distant d'un bord et ce bord, afin que l'épaisseur de la peau diminue progressivement vers le bord.

D'autres caractéristiques et avantages de l'invention seront mieux compris à la lecture de la description qui va suivre d'exemples de réalisation, faite en référence aux dessins annexés sur lesquels, les figures 1 et 2 ayant déjà été décrites :
les figures 3 et 4 sont des schémas illustrant un premier mode d'exécution du procédé de l'invention ;
la figure 5 est un schéma illustrant une variante du procédé décrit en référence aux figures 3 et 4 ;
la figure 6 illustre une étape essentielle d'un second mode d'exécution du procédé selon l'invention ;
les figures 7 et 8 illustrent un troisième mode d'exécution du procédé selon l'invention ; et
la figure 9 est un schéma illustrant un mode d'exécution d'un procédé qui ne fait pas partie de la présente invention.
Les figures 3 et 4 illustrent un premier mode d'exécution du procédé selon l'invention.

Une peau de cuir 12 est disposée à plat et subit, dans la région B, une application locale, par exemple par un appareil 22 de pulvérisation, d'une résine thermoplastique 24 qui forme une couche ayant une épaisseur de l'ordre de 1 mm, par exemple comprise entre quelques dixièmes de millimètre et deux ou trois millimètres. La matière thermoplastique peut être de faible coût, par exemple du chlorure de polyvinyle, une polyoléfine telle que le polyéthylène, ou un polyuréthanne par exemple. La peau ayant la couche de résine est normalement conservée à plat ; lorsqu'elle doit être utilisée, elle est introduite dans une étuve dans laquelle sa température est portée entre 60 et 100 °C, suivant la nature de la matière thermoplastique de la couche 24. Le chauffage peut aussi être effectué localement par un dispositif de chauffage local, par exemple infrarouge ou à résistance.

Lorsque la matière thermoplastique est ramollie, la peau 12 est placée dans un moule qui a la forme que doit prendre la peau dans les régions A, B et C. L'ensemble est alors refroidi, de sorte que la matière thermoplastique 24 garde la forme courbe qu'elle a prise et la peau a donc une forme arrondie dans la région B. Dans un exemple, cette région B, dans un plan perpendiculaire au plan du dessin, forme un contour pratiquement continu, à distance du bord. La matière thermoplastique forme ainsi une couche 24 de faible largeur (correspondant à la région B) sur un contour qui suit le bord de la peau de cuir, mais à distance de ce bord.

La figure 5 illustre une variante du mode d'exécution décrit en référence aux figures 3 et 4. Dans cette variante, la couche 24 de matière thermoplastique est remplacée par un renfort 26 qui est collé à la peau 12 par une couche de colle 28. Le renfort 26 peut être une bande d'un matériau thermodéformable. Par exemple, le renfort 26 peut être formé d'une bande textile imprégnée d'une matière thermoplastique, par exemple une polyoléfine.

Comme décrit en référence aux figures 3 et 4, lorsque le renfort 26 a été collé dans la région B, la peau 12 peut être conservée à plat jusqu'à son utilisation. A ce moment, la peau 12 peut être chauffée, par passage à l'étuve comme indiqué en référence aux figures 3 et 4, ou simplement localement, dans la région B, de manière qu'elle puisse être mise en forme, de la manière indiquée sur la figure 4. Après refroidissement, le renfort 26 est rigidifié et maintient la région B de la peau à la forme correspondant à celle du moule.

Dans les modes d'exécution décrits, la matière plastique et la colle sont appliquées à la face intérieure de la peau, c'est-à-dire à la face qui ne doit pas être apparente, et elles ne peuvent pas migrer jusqu'à la face apparente. De cette manière, la présence de la résine ou de la colle n'apparaît pas à l'extérieur de la pièce terminée qui a donc un bel aspect.

La figure 6 illustre un second mode d'exécution de l'invention. Dans ce cas, une peau 12 est disposée contre un moule afin qu'elle s'applique contre la surface du moule de mise en forme dans les régions A, B et C. Dans ce cas, l'étape d'augmentation de rigidité comprend un écrasement local de la peau de cuir, à l'emplacement 30. En effet, le cuir est un matériau fibreux et, lorsqu'il est écrasé, par exemple par application d'une pression ou par martelage, sa rigidité augmente à l'emplacement d'épaisseur réduite.

Lorsque la peau de cuir 12 représentée sur la figure 6, écrasée dans la région 30 par compression ou martelage, est retirée du moule, elle garde pratiquement la forme indiquée sur la figure 6 ou au moins une forme largement courbée dans la région B.

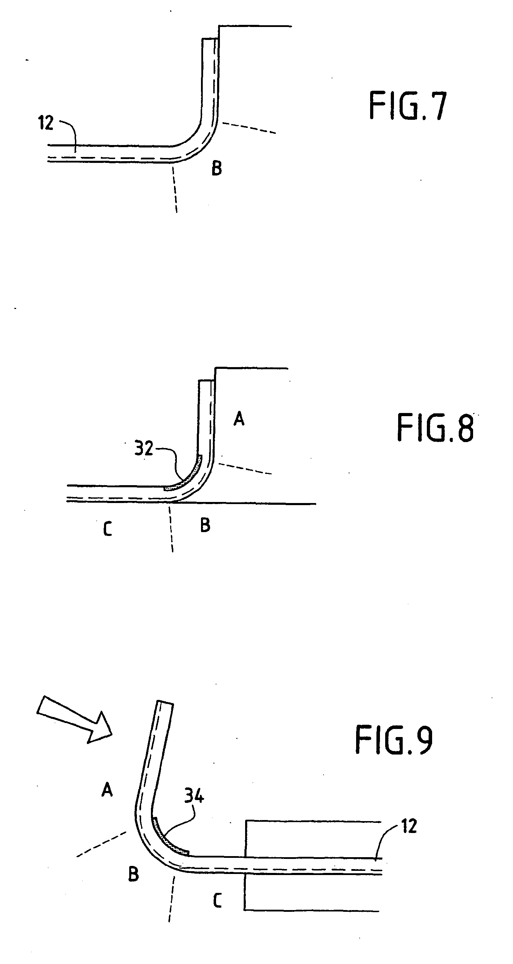

Les figures 7 et 8 illustrent un troisième mode d'exécution de l'invention. Alors que, en référence aux figures 3 à 5, on a décrit un mode d'exécution dans lequel l'augmentation de rigidité est obtenue par refroidissement, le mode d'exécution des figures 7 et 8 correspond à une augmentation de rigidité par application locale d'un matériau de maintien en forme.

Dans l'exemple de ces figurés, un liquide d'imprégnation, sous forme d'une dispersion aqueuse d'une substance de rigidification (qui peut être naturelle comme des protéines, telles la caséine et l'amidon, ou synthétique comme du polyuréthanne), est appliqué à l'aide d'un pinceau sur la surface intérieure de la partie arrondie de la pièce de cuir 12 représentée sur la figure 7, c'est-à-dire dans la région B. La concentration de protéine, telle que la caséine, et la quantité de liquide appliquée sont telles que la solution pénètre dans le cuir sur une partie seulement de son épaisseur. Comme l'indique la figure 8, la protéine pénètre ainsi sur une partie arrondie 32 de la région 20, à la face intérieure de la peau, sans atteindre la face extérieure. La peau tenue par le moule comme indiqué sur la figure 7 subit alors un séchage et, lorsque la couche 32 a séché, elle assure le maintien en forme du cuir dans la région B comme indiqué sur la figure 8.

La figure 9 illustre un mode d'exécution qui combine plusieurs des modes d'exécution précédents, mais qui ne fait pas partie de la présente invention. Dans ce cas, la peau 12 est maintenue afin que sa partie marginale, comprenant au moins les régions A et B, soit libre. Une couche de colle 34 est appliquée à la face intérieure, et une déformation de la peau lui donne la forme voulue dans sa région marginale. Cette déformation est illustrée par une flèche qui indique soit l'application d'une pression à proximité du bord de la peau, soit même un martelage, cette opération étant poursuivie jusqu'à ce que la colle 34 ait pratiquement séché. A ce moment, la colle 34 assure le maintien de la région B à une forme arrondie.

Dans une variante des divers modes d'exécution précédents, il est aussi possible de coller, dans la région B de la peau de cuir 12, une bande d'aluminium recuit ayant une rigidité suffisante pour que, lorsqu'elle a été déformée, elle maintienne la peau de cuir à la forme à laquelle elle a été déformée. Ce collage d'une bande d'aluminium est réalisé dans un moule tel qu'illustré sur les figures 7 et 8.

Dans tous les modes d'exécution, il est avantageux que le bord de la peau soit découpé en direction inclinée, comme représenté sur la figure 2, afin que l'épaisseur de la peau diminue progressivement vers le bord. En effet, la combinaison de la bonne orientation de la région de bord A donnée par la région arrondie B avec la souplesse progressivement accrue vers le bord donne un effet de synergie qui permet à cette région A d'une part de laisser passer l'air en formant un évent et d'autre part d'arrêter la mousse pendant la fabrication.

Ainsi, tous les modes de réalisation décrits assurent la maîtrise de la forme de la partie de peau comprise dans la région B afin que les conditions de coopération étanche dans la région A soient optimales.

## Revendications

1. Procédé de mise en forme d'une peau de cuir (12) comportant une partie marginale (A), la peau (12) ayant une face extérieure destinée à être apparente et une face intérieure, le procédé étant du type qui comprend :
- une étape d'application d'un traitement d'augmentation de rigidité, et
- une étape de mise en forme de la peau à l'aide d'un moule coopérant avec la face extérieure de la peau (12),
**caractérisé en ce que** :
- l'une au moins des deux étapes précitées n'est exécutée que localement à un emplacement allongé (B) distant d'un bord de la peau (12) et sensiblement parallèle à ce bord et
- il comprend une étape destinée à faciliter le maintien en forme de la partie marginale (A) par la mise en oeuvre des étapes d'application et de mise en forme.

2. Procédé selon la revendication 1, **caractérisé en ce que** l'étape d'application d'un traitement d'augmentation de rigidité est exécutée avant l'étape de mise en forme et comprend une application locale d'un matériau de maintien en forme (24, 26) à la face intérieure de la peau.

3. Procédé selon la revendication 2, **caractérisé en ce que** l'application locale d'un matériau de maintien en forme est l'application d'une résine thermoplastique (24).

4. Procédé selon la revendication 2, **caractérisé en ce que** l'application locale d'un matériau de maintien en forme est l'application d'une colle (28) et d'un renfort thermoplastique (26).

5. Procédé selon l'une quelconque des revendications 2 à 4, **caractérisé en ce que** l'étape destinée à faciliter le maintien en forme comprend un refroidissement, postérieur à une étape de chauffage et à l'étape de mise en forme sur un moule.

6. Procédé selon la revendication 2, **caractérisé en ce que** l'application locale d'un matériau de maintien en forme est l'application d'une bande d'aluminium (26) collée localement à la face intérieure de la peau de cuir (12).

7. Procédé selon la revendication 1, **caractérisé en ce que** l'étape d'application d'un traitement d'augmentation de rigidité est effectuée après l'étape de mise en forme de la peau, et elle comprend un écrasement local (30) de la peau de cuir (12) audit emplacement allongé (B) distant d'un bord de la peau.

8. Procédé selon la revendication 1, **caractérisé en ce que** l'étape d'application d'un traitement d'augmentation de rigidité est effectuée après l'étape de mise en forme de la peau, le procédé comprend une application locale d'un matériau de maintien en forme à la face intérieure de la peau, et le procédé comprend le séchage du matériau de maintien en forme lorsque la peau de cuir (12) est à la forme voulue.

9. Procédé selon la revendication 1, **caractérisé en ce que** l'étape d'application d'un traitement d'augmentation de rigidité est exécutée après l'étape de mise en forme de la peau (12) et comprend l'application locale, à la face intérieure de la peau de cuir, d'un matériau d'imprégnation (32), puis le séchage du matériau d'imprégnation (32).

10. Procédé selon l'une quelconque des revendications précédentes, **caractérisé en ce qu'**il comprend aussi une étape de découpe du bord (20) en direction inclinée, dans une partie au moins de la peau de cuir (12) comprise entre l'emplacement allongé (B) distant d'un bord et ce bord, afin que l'épaisseur de la peau diminue progressivement vers le bord.

## Claims

1. Process for shaping a leather hide (12) comprising a marginal part (A), said hide (12) having an outer face, which is intended to be visible, and an inner face, said process being of the type that comprises:
- a stage involving the application of a stiffness-increasing treatment; and
- a stage involving the shaping of the hide with the aid of a mould which cooperates with the outer face of the hide (12);
**characterised in that**:
- at least one of the aforesaid two stages is carried out only locally at an elongated location (B) which is at a distance from an edge of the hide (12) and is substantially parallel to the said edge, and
- said process comprises a stage which is intended to make it easier to maintain the marginal part (A) in shape by implementing the applying and shaping stages.

2. Process according to claim 1, **characterised in that** the stage involving the application of a stiffness-increasing treatment is carried out before the shaping stage and comprises the local application of a shape-maintaining material (24, 26) to the inner face of the hide.

3. Process according to claim 2, **characterised in that** the local application of a shape-maintaining material constitutes the application of a thermoplastic resin (24).

4. Process according to claim 2, **characterised in that** the local application of a shape-maintaining material constitutes the application of an adhesive (28) and of a thermoplastic reinforcement (26).

5. Process according to any of claims 2 to 4, **characterised in that** the stage which is intended to make the maintenance in shape easier comprises a cooling operation, subsequent to a heating stage and to the stage involving shaping on a mould.

6. Process according to claim 2, **characterised in that** the local application of a shape-maintaining material constitutes the application of a strip of aluminium (26) which is bonded locally to the inner face of the leather hide (12).

7. Process according to claim 1, **characterised in that** the stage involving the application of a stiffness-increasing treatment is effected after the stage involving the shaping of the hide, and comprises local flattening (30) of the leather hide (12) at the said elongated location (B) which is at a distance from an edge of the hide.

8. Process according to claim 1, **characterised in that** the stage involving the application of a stiffness-increasing treatment is effected after the stage involving the shaping of the hide, the process comprises the local application of a shape-maintaining material to the inner face of the hide, and said process comprises the drying of the shape-maintaining material which the leather hide (12) is in the desired shape.

9. Process according to claim 1, **characterised in that** the stage involving the application of a stiffness-increasing treatment is carried out after the stage involving the shaping of the hide (12) and comprises the local application, to the inner face of the leather hide, of an impregnating material (32), and then the drying of said impregnating material (32).

10. Process according to any of the preceding claims, **characterised in that** it also comprises a stage involving the cutting of the edge (20) in an inclined direction, in at least a part of the leather hide (12) which is included between the elongated location (B) which is at a distance from an edge, and the said edge, so that the thickness of the hide diminishes progressively towards the edge.

## Patentansprüche

1. Verfahren zur Verformung einer Hut aus Leder (12), welche einen Randteil (A) aufweist, wobei die Haut (12) eine Außenseite, die dazu bestimmt ist, sichtbar zu sein, und eine Innenseite aufweist und wobei das Verfahren von der Art ist, dass es
- einen Anwendungsschritt der Behandlung zur Verbesserung der Steifigkeit und
- einen Verformungsschritt der Haut unter Verwendung einer Form, welche mit der Außenseite der Haut (12) zusammenwirkt,
umfasst, **dadurch gekennzeichnet, dass**:
- mindestens eine der oben genannten zwei Schritte nur lokal an einer Längsstelle (B), welche vom Rand der Haut (12) entfernt ist und im Wesentlichen parallel zu diesem Rand verläuft, durchgeführt wird und
- es einen Schritt umfasst, welcher zur Vereinfachung der Beibehaltung der Form des Randteils (A) durch die Durchführung des Anwendungsschrittes und des Verformungsschrittes dient.

2. Verfahren nach Anspruch 1, **dadurch gekennzeichnet, dass** der Anwendungsschritt der Behandlung zur Verbesserung der Steifigkeit vor dem Verformungsschritt durchgeführt wird und die lokale Anwendung eines Materials zur Formbeibehaltung (24, 26) auf die Innenseite der Haut umfasst.

3. Verfahren nach Anspruch 2, **dadurch gekennzeichnet, dass** die lokale Anwendung eines Materials zur Formbeibehaltung die Anwendung eines thermoplastischen Harzes (24) ist.

4. Verfahren nach Anspruch 2, **dadurch gekennzeichnet, dass** die lokale Anwendung eines Materials zur Formbeibehaltung die Anwendung eines Klebstoffes (28) und einer thermoplastischen Verstärkung (26) ist.

5. Verfahren nach einem der Ansprüche 2 bis 4, **dadurch gekennzeichnet, dass** der Schritt, welcher zur Vereinfachung der Beibehaltung der Form dient, eine Abkühlung nach einem Aufheizungsschritt und einen Verformungsschritt in einer Form umfasst.

6. Verfahren nach Anspruch 2, **dadurch gekennzeichnet, dass** die lokale Anwendung eines Materials zur Formbeibehaltung die Anwendung eines Aluminiumbandes (26), welches lokal auf die Innenseite der Haut aus Leder (12) aufgeklebt ist, ist.

7. Verfahren nach Anspruch 1, **dadurch gekennzeichnet, dass** der Anwendungsschritt der Behandlung zur Verbesserung der Steifigkeit nach dem Verformungsschritt der Haut durchgeführt wird und dass er eine lokale Quetschung (30) der Haut aus Leder (12) an der Längsstelle (B), welche vom Rand der Haut entfernt ist, umfasst.

8. Verfahren nach Anspruch 1, **dadurch gekennzeichnet, dass** der Anwendungsschritt der Behandlung zur Verbesserung der Steifigkeit nach dem Verformungsschritt der Haut durchgeführt wird, wobei das Verfahren die lokale Anwendung eines Materials zur Formbeibehaltung auf die Innenseite der Haut umfasst und das Verfahren die Trocknung des Materials zur Formbeibehaltung, wenn die Haut aus Leder (12) in der gewünschten Form ist, umfasst.

9. Verfahren nach Anspruch 1, **dadurch gekennzeichnet, dass** der Anwendungsschritt der Behandlung zur Verbesserung der Steifigkeit nach dem Verformungsschritt der Haut (12) durchgeführt wird und die lokale Anwendung eines Imprägnierungsmaterials (32) auf der Innenseite der Haut aus Leder gefolgt von der Trocknung des Imprägnierungsmaterials (32) umfasst.

10. Verfahren nach einem der vorherigen Ansprüche, **dadurch gekennzeichnet, dass** es zusätzlich einen Schritt der Zuschneidung des Randes (20) in eine schräge Richtung in mindestens einem Bereich der Haut aus Leder (12) zwischen der Längsstelle (B), welche vom Rand entfernt ist, und diesem Rand umfasst, um die Höhe der Haut schrittweise zum Rand hin zu verringern.
